# EUROPEAN PATENT SPECIFICATION

(11) **EP 1 210 825 B1**
(45) Date of publication and mention of the grant of the patent: **11.02.2004**
(21) Application number: 00955764.6
(22) Date of filing: 21.08.2000
(51) Int. Cl.: H04N 7/24

(54) **SYSTEM AND METHOD FOR FACILITATING TRANSMISSION OF IP DATA OVER DIGITAL MPEG NETWORKS**
SYSTEM UND VERFAHREN ZUR VEREINFACHTEN ÜBERTRAGUNG VON IP-DATEN ÜBER EIN MPEG NETZWERK
SYSTEME ET PROCEDE DESTINES A FACILITER LA TRANSMISSION DES DONNEES IP SUR LES RESEAUX NUMERIQUES MPEG

(30) Priority: 20.08.1999 US 149702 P; 25.08.1999 US 150535 P; 18.08.2000 US 642544
(43) Date of publication of application: 05.06.2002
(73) Proprietor: General Instrument Corporation, Horsham, Pennsylvania 19044 (US)
(72) Inventor: SAFADI, Reem, Horsham, PA 19044 (US); MACK, Robert, Collegeville, PA 19426-2853 (US); JOST, Arthur, Mt. Laurel, PA 17055 (US)
(74) Representative: Cooper, John
(86) International application number: PCT/US2000/022860
(87) International publication number: WO 2001/015455

(56) References cited:
- EP-A- 0 854 650
- WO-A-97/20413
- WO-A-97/28652
- B. MACK: "ATVEF Binding for Digital MPEG Networks" SOCIETY OF CABLE TELECOMMUNICATIONS RNGINEERS, SCTE DVS 311, [Online] 2 February 2000 (2000-02-02), pages 1-13, XP002155130 Retrieved from the Internet: <URL:http://www.ATVEF.com/library/SCTE_IP_ Binding.pdf> [retrieved on 2000-11-29]
- CLAUSEN H D ET AL: "MPEG-2 AS A TRANSMISSION SYSTEM FOR INTERNET TRAFFIC" IEEE INTERNATIONAL PERFORMANCE, COMPUTING AND COMMUNICATIONS CONFERENCE,US,NEW YORK, NY: IEEE, February 1998 (1998-02), pages 101-107, XP000668934 ISBN: 0-7803-4469-3

## Description

### FIELD OF THE INVENTION

The present invention relates generally to a system and method for transmitting digital information, and more particularly, for facilitating transmission of IP data over digital MPEG networks.

### BACKGROUND OF THE INVENTION

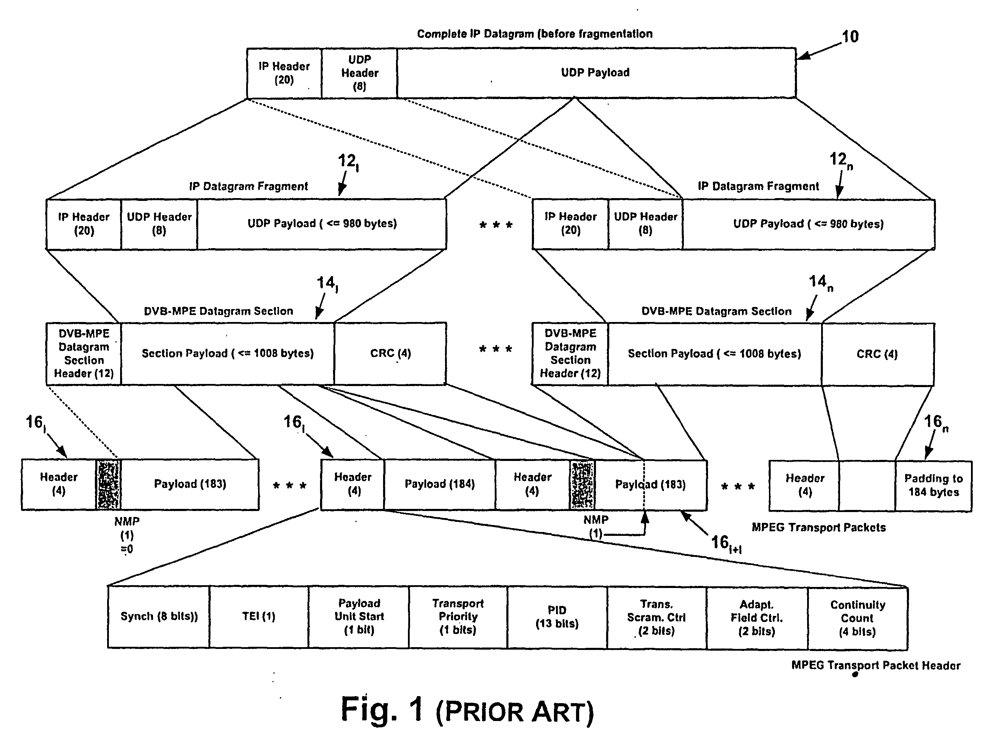

Communication in modem society has been greatly enhanced by the advent of such widespread data networks as public telephone systems, the Internet (including the World Wide Web) and cable and satellite television systems. An important protocol for transferring information, for example through the Internet, is the well-known Internet Protocol (IP). However, for cable and satellite systems, an important mechanism is the Moving Pictures Expert Group (MPEG) transport stream (*i.e*., MPEG-2). To facilitate interoperability, standards have been developed that specify how IP datagrams are mapped onto MPEG-2 transport packets, as seen be reference to ATSC Data Broadcasting Specification, ATSC T3/S13 Doc. 010 DVS-161, R3ev 1.0 draft, March 31, 1999, and Digital Video Broadcasting (DVB): DVB Specification for Data Broadcasting, EN 301 192 v1.2.1 (1999-01) (available at http://www.etsi.org). According to the DVB standard, a complete IP datagram 10, as shown in Figure 1, if greater than 1008 bytes in length, is fragmented into a plurality of IP datagram fragments 12₁, ..., 12ₙ. Each IP datagram fragment 12₁, ..., 12ₙ is then encapsulated into a DVB-MPE datagram section 14₁, ..., 14ₙ, (a "DSM-CC" section according to the ATSC standard). Each DVB-MPE datagram section is then, itself, broken up and carried in a payload portion of an MPEG-2 transport packet 16₁, ..., 16ᵢ, 16ᵢ₊₁, ..., 16ₙ, which packet is limited to 188 bytes.

Although fairly involved, as shown in Figure 1, interoperability between IP and MPEG is both possible and desirable, since it provides an opportunity for cable and satellite system operators to provide enhanced services to subscribers. As one example, the Advanced Television Enhancement Forum (ATVEF), a cross-industry group, has specified a standard for providing enhanced television programming which uses Internet technologies, as seen by reference to Enhanced Content Specification, Advanced Television Enhancement Forum (ATVEF), Version 1.1r26 (hereinafter "ATVEF document"). The ATVEF document discloses an ATVEF binding, which is a definition of how ATVEF will run on a given network (*i.e*., the ATVEF binding provides the "glue" between the ATVEF specification and a given network specification). The ATVEF document further discloses that the *binding to IP* is the reference binding because IP is available to run over virtually any kind of network.
In addition, it is contemplated that ATVEF data may be distributed using an IP multicast mechanism, as described in RFC 1112. Thus, while IP can be carried on MPEG networks according to the ATSC or DVB standards referred to above, for example to implement ATVEF, there are a variety of shortcomings.

One shortcoming is inefficiency. Facilitating IP protocol carriage within MPEG transport streams according to the above-referenced standards does not optimize the processing associated with the mapping of IP datagrams onto MPEG-2 transport packets. Specifically, a set-top box (STB) or the like at a receiving end conventionally must receive a plurality of MPEG transport packets to put the DVB-MPE sections back together and parse the result to determine the destination, or worse yet, reassemble the fragmented IP datagrams to determine the destination from the address field. The STB must then determine whether to pass the captured IP datagram on to higher layers for further processing. Due to the continuous flow of IP datagrams, for example in an IP multicast scenario, the parsing and reassembly process may use a significant amount of processing resources (*e.g*., CPU cycles, memory, etc.). This usage reduces the overall performance of the STB regardless of whether an application running on the STB has established a connection or not (*i.e*., established a need for the IP datagrams).

One approach taken in the art, disclosed in M. *Dolan, A Discussion ofA TVEF and Its Possible Bindings Onto The ATSC Transport*, Version 1.0, Draft 3, February 16, 1999, to address the IP-to-MPEG binding, proposes utilizing an MPEG system data construct (*i.e*., referred to as a Virtual Channel Table) to explicitly indicate to the receiving terminal (*e.g*., STB) every ATVEF data Packet Identification (PID), a data component of an MPEG service. This approach, however, introduces undesirable coupling and other inefficiencies. For example, this approach restricts the IP datagrams to a single system, that is, the VCT cannot readily span multiple systems since VCTs are system specific (homogeneous, i.e., several cable systems/headends, or heterogeneous, i.e., across satellite and cable).

There is therefore a need to provide an improved method and system for transmitting IP data to a subscriber that minimizes or eliminates one or more of the shortcomings set forth above.

WO97/20413 discloses a packet switching system enabling, for example, TCP/IP traffic to be transmitted via an MPEG data stream. The receiving device for the TCP/IP traffic is allocated a temporary IP address and part of that address is used as the packet identifier (PID) for the MPEG transport packets.

### SUMMARY OF THE INVENTION

One advantage of the present invention is efficiency. If an application running on a set-top box has not established a connection to receive IP data, then there is no need to forward the IP datagrams, and, more importantly, there is no need to perform the reassembly and syntax parsing referred to in the Background to reconstruct the IP datagrams. When a connection has been established, however, a descriptor is sent to the set-top box (in a PMT) that associates a data stream and a MAC destination address. The invention allows earlier filtering to determine whether certain MPEG data streams contain the desired IP data. The inefficiency and unnecessary usage of resources of conventional approaches is eliminated with the present invention.

A method is provided for facilitating delivery of content in a content data stream to a terminal. The method includes three main steps. The first step involves generating a descriptor for the content data stream that includes a destination address. The next step involves transmitting the descriptor to the terminal in a Program Map Table (PMT). The third step involves locating the content data stream at the terminal using the destination address in the descriptor.

In a preferred embodiment, the content comprises Internet Protocol (IP) datagrams where the content data stream is transmitted to the terminal in a Moving Pictures Expert Group-2 (MPEG-2) transport stream. In a still more preferred embodiment, the content complies with an Advanced Television Enhancement Forum (ATVEF) specification for advanced television programming. In a still further preferred embodiment, the ATVEF data is configured to enhance an audiovisual service also provided to the terminal over the MPEG transport stream. The invention thus enables delivery of enhanced audiovisual services.

The descriptor enables earlier filtering, without which the terminal, which may be a digital consumer terminal (DCT), would have to receive and examine a plurality ofDVB-MPE or DSM-CC sections, or worse, parse these sections to reconstruct the IP datagram. This would be needed in order to examine the destination address field within the datagram to determine whether the reconstructed datagram should be passed on to higher layers (i.e., if an application had already established a connection with similar attribute values, e.g., IP multicast address). The invention minimizes the impact on the terminal's resources, as well as enables an efficient association of multiple data streams to accompany the audiovisual service. The invention enables the service definition (*i.e*., contained in the descriptor) to be self contained, and thus be adaptable for use over multiple systems, since the PMT is not system specific like a Virtual Channel Table (VCT).

An apparatus for generating the descriptor, and a terminal configured to recognize and use the descriptor are also presented.

Other objects, features, and advantages of the present invention will become apparent to one skilled in the art from the following detailed description and accompanying drawings illustrating features of this invention by way of example, but not by way of limitation.

### BRIEF DESCRIPTION OF THE DRAWINGS

Figure 1 is an illustration of a prior art mapping scheme for mapping IP datagrams into MPEG transport packets;
Figure 2 is a block diagram view of a system for local (headend) IP data insertion according to the invention;
Figure 3 is a simplified block diagram view of protocol stacks associated with various components for supporting the present invention;
Figure 4 is a simplified, block diagram view of a Program Map Table (PMT) containing a descriptor according to the present invention; and
Figure 5 is a simplified flowchart of the processing that occurs in a set-top box (terminal) in accordance with the present invention.

### DETAILED DESCRIPTION OF THE PREFERRED EMBODIMENTS

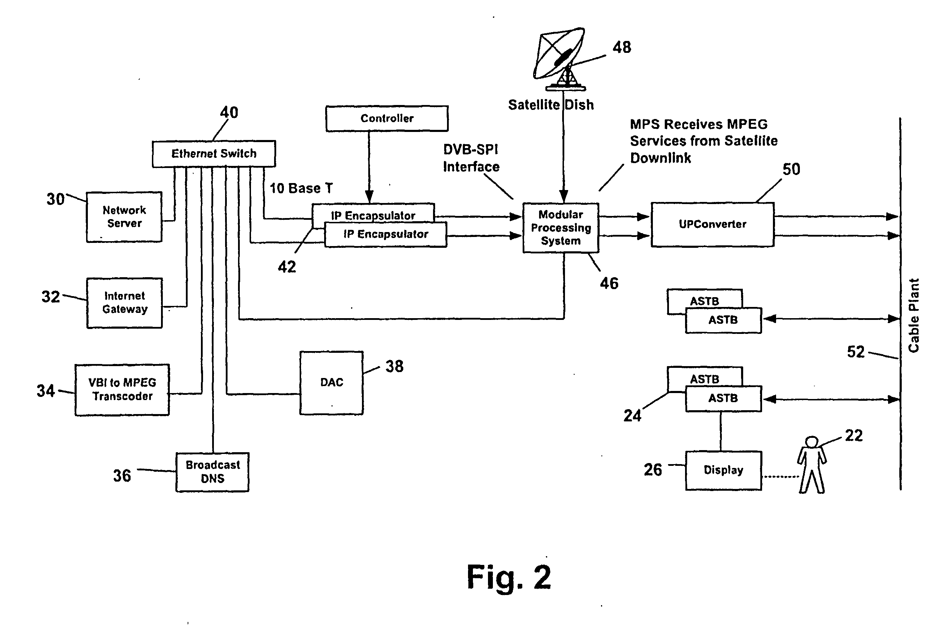

Referring now to the drawings wherein like reference numerals are used to identify identical components in the various views, Figure 2 is block diagram of a system 20 in accordance with the present invention. System 20 is configured for allowing or facilitating a subscriber 22 to access Internet Protocol (IP) data by way of a terminal 24 (labeled in the Figure 1 as ASTB for Advanced Set-Top Box). The IP data may be ATVEF data, used to provide enhanced audiovisual services, perhaps being displayed on a display 26 connected to terminal 24. System 20 illustrates the various equipment involved in inserting IP data into MPEG data streams at a local or headend location. In an alternative embodiment (not shown), IP data may be inserted at a National Access System (NAS) and broadcast to a population of terminals 24. Figure 2 further illustrates a variety of IP data sources such as a network server 30, an Internet gateway 32, and a Vertical Blanking Interval (VBI)-to-MPEG transcoder 34. Figure 2 further shows a broadcast domain name server (DNS) 36, a digital addressable controller (DAC) 38, a switch such as an Ethernet switch 40, an IP encaspsulator 42, a controller 44, a modular processing system (MPS) 46, a satellite dish 48, an up-converter 50, and cable plant 52.

Terminal 24 may comprise any one of an advanced set-top box (ASTB), a set-top terminal, a consumer terminal such as a digital consumer terminal (DCT), a cable television entertainment terminal such as a digital consumer terminal (DCT), a digital television, or a host with point of deployment (POD) capability including a suitably configured personal computer (PC).

Terminal 24, according to the invention, may provide a platform for running third-party applications, which may be configured to request connections to IP data sources associated with a currently tuned service, or, available on a completely different Transport Stream (TS). Terminal 24 is configured to locate the data stream (i.e., a particular packet identification -PID) carrying the requested IP data using an inventive descriptor, and thereafter reassemble the IP datagrams fragments taken from the MPEG transport packets. The IP data will then be extracted and passed to IP layer software also running on terminal 24 for further processing. Terminal 24 may comprise otherwise conventional components known in the art, modified according to the invention described herein. Network server 30, Internet gateway 32, and transcoder 34 may comprise conventional components known to those of ordinary skill in the art.

Digital Addressable Controller (DAC) 38 allows local control and authorization for functionality to already deployed terminals 24, among other functions. DAC 38 may comprise commercially available equipment, such as model DAC 6000 Digital Addressable Controller, available from General Instrument Corporation, Horsham Pennsylvania, USA.

IP encapsulator 42 (and its associated controller 44) may also comprise commercially available components, known to those of ordinary skill in the art.

MPS 46 is configured as a processing platform for incoming digital data streams. MPS 46 may perform such digital processing functions as encryption/decryption, stream multiplexing, rate conversion, message insertion and extraction, and can be configured with a variety of input and output options, such as DS3 I/O, 64/256 QAM (output) at IF carrying an MPEG-2 Transport Stream (TS), and the like. MPS 46 may comprise commercially available equipment, such as model MPS-Modular Processing System available from General Instrument Corporation, Horsham, Pennsylvania, USA.

Up converter 50 is configured to (i) receive a 64 or 256 QAM signal at IF from MPS 46 and (ii) up-convert the IF signal to RF for distribution on a selected physical channel on plant 52, as known. Up-converter 50 may comprise commercially available component, such as model C6U from General Instrument Corporation, Horsham, Pennsylvania, USA.

The present invention involves generating a descriptor, which is transmitted with a Program Map Table (PMT) on the cable plant, destined to be received and processed by one or more of terminals 24. Third party application developers may transmit one-way IP datagrams (e.g., IP multicast containing ATVEF data) to their applications running within terminal 24. Without the above-described descriptor, the terminal 24 must engage in substantial processing to parse data streams looking for the desired IP data, or worse, must reassemble the fragmented IP datagrams in order to recover and process the destination address. The descriptor, in accordance with the present invention, facilitates earlier decision making and faster processing in terminal 24.

With continued reference to Figure 2, IP datagrams from various IP data sources are provided to IP encapsulator 42 over a network, such as, for example, an Internet network. These IP data sources may include a local network server 30, transcoder 34 having one or more analog broadcasts as inputs that provide IP data contained in the vertical blanking interval, or gateway 32 via its connections to the Internet. These sources in-turn transmit the IP datagrams via switch 40 to IP encapsulator 42. While shown as Ethernet, the IP-data source to encapsulator 42 path may comprise other transmission technologies. Each IP encapsulator 42 extracts IP data from the Ethernet frames and encapsulates them, in one embodiment, within DVB-MPE datagrams sections 14₁, ..., 14ₙ, as shown in exemplary fashion in Figure 1. Table 1, below, shows an exemplary syntax for the DVB-MPE sections. The DVB-MPE standard is a public standard, and will be described in connection with Table 1 only insofar as relevant to the present invention. The IP encapsulator 42 thereafter segments the DVB MPE datagrams sections into MPEG transport packets 16ᵢ and transmits them to modular processing system 46. MPS 46 receives the MPEG transport packets from IP encapsulator 42 and may multiplex the received PID streams with MPEG video/audio services received from a satellite down link 48 or video server, or the like.

In an alternate embodiment, network server 30 may perform the DVB-MPE encapsulation of the IP datagrams and provide the result directly to MPS 46 over a DVB System Parallel Interface (SPI) or Asynchronous Serial Interface (ASI).

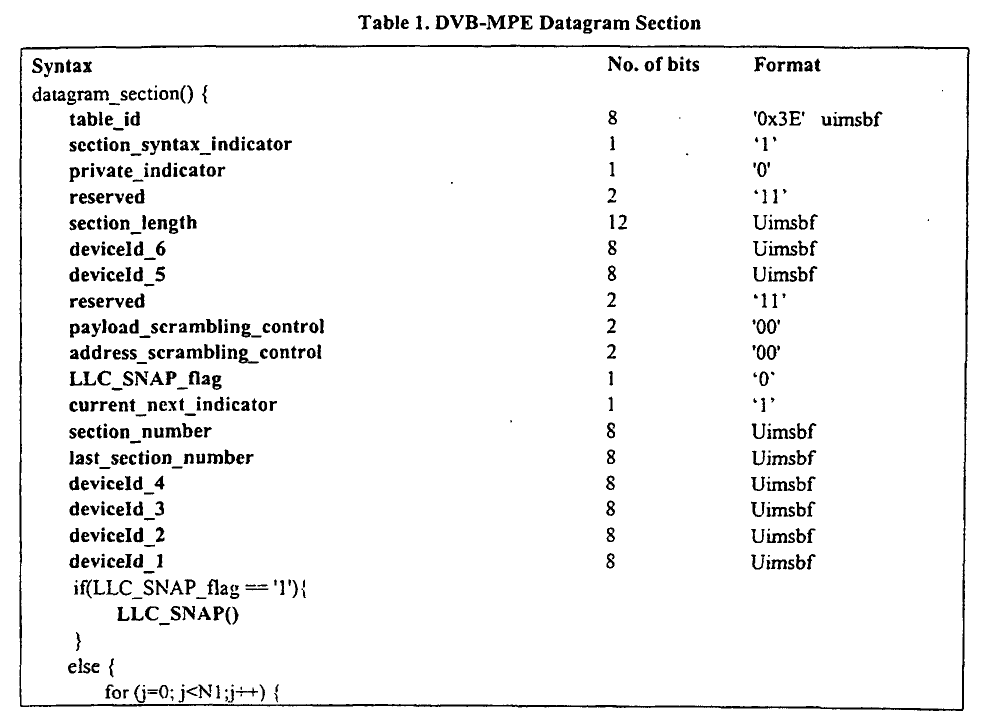

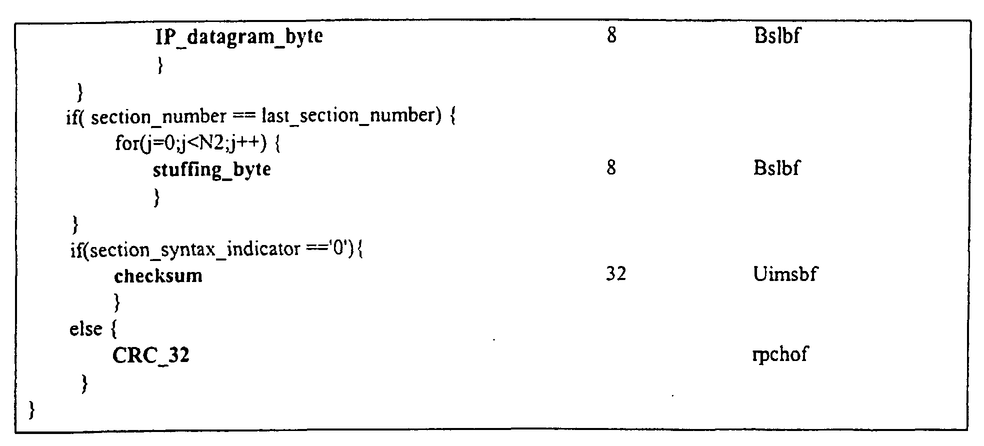

The table_id parameter is an 8-bit field which is set to "0x3E", indicating DSM-CC sections with private data in accordance with ISO/IEC 13818-6 [2]. The deviceId_1 through deviceId_6 parameters define a MAC_address_[1..6], i.e., this is 48-bit field that contains the MAC address of the destination. The MAC address is thus fragmented into 6 fields of 8-bits each, labeled deviceId_1 to deviceId_6. The deviceId_1 field preferably contains the most significant byte of the MAC address, while deviceId_6 contains the least significant byte. RFC 1112 specifies the mapping from Multicast IP addresses to Ethernet MAC addresses. The MAC address fields, in a preferred embodiment, are encoded in accordance with this mapping. The mapping is straight-forward and is as follows. The IP multicast address will be mapped into the corresponding hardware multicast address by placing the low-order 23 bits of the IP multicast address into the lower order 23 bits of the multicast MAC address 01.00.5E.00.00.00 (base 16).

In addition, the section_number parameter is an 8-bit field. If the IP datagram is carried in multiple sections, then this field indicates the position of the section within the fragmentation process. Otherwise it will be zero. It should be appreciated that, in one embodiment, the IP datagram fragments must be delivered to the data link layer such that they are no larger than the Maximum Transmission Unit (MTU) size of 1008 bytes. By doing this there is no need to further segment the IP datagram fragments across DVB-MPE datagram sections. The last_section_number parameter is an 8-bit field that indicates the number of the last section that is used to carry the datagram, i.e., the number of the last section of the fragmentation process.

With continued reference to Figure 2, a description of the operation of the invention on the network side (as opposed to the terminal side) will be set forth. The DAC 38 sends commands to MPS 46 (e.g., a load_mps commands) to control service re-multiplexing, Program Specific Information (PSI) message extraction and insertion, and service encryption. Additionally, DAC 38 sends to MPS 46 other commands (e.g., Include Component commands) that identify input elementary PID streams that are to be included within a defined output service. This capability of MPS 46 will be used to map the appropriate PID streams carrying IP data into a particular service multiplex. In accordance with the present invention, the commands sent by DAC 38 (e.g., Include Component) will also be used to provide to MPS 46 (i) a stream_type and (ii) the above-described descriptor associated with the input PID stream carrying IP datagrams destined for terminals 24. The MPS can thus send a PMT including the stream-type and address descriptor out on the MPEG-2 Transport Stream. The processing that occurs in terminal 24, using the inventive descriptor, will be described in detail below.

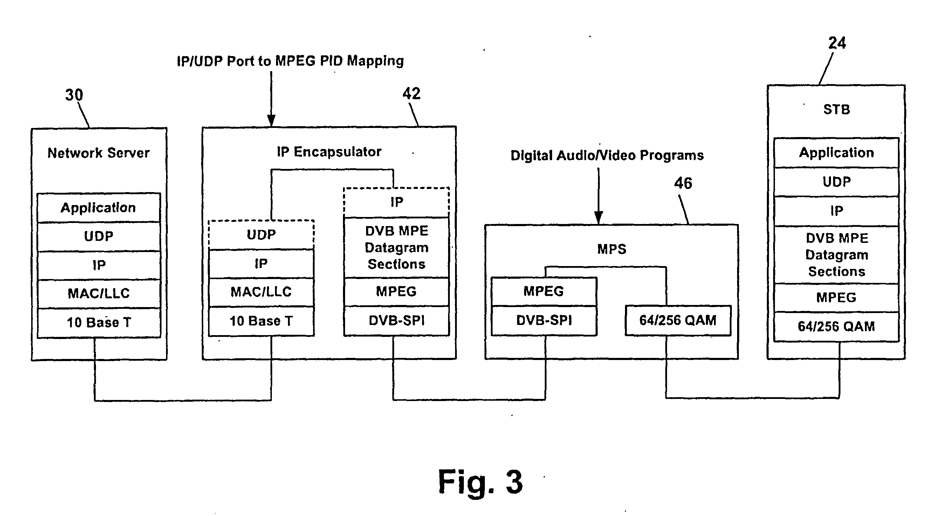

Figure 3 illustrates protocol stacks an IP data source, for example, network server 30, IP encapsulator 42, MPS 46 and terminal 24 for one-way IP datagram broadcasts. Shown in Figure 3, IP encapsulator 42 presents a standard network interface to a third-party network server 30. Encapsulator 42, as described above, performs the encapsulation of received IP datagrams into, for example, DVB-MPE datagram sections, such as sections 14₁, ..., 14ₙ, shown in Figure 1. The encapsulated IP datagrams are then segmented into MPEG transport packets which are passed to MPS 46 for distribution to terminals 24 by way of, for example, 64/256 QAM via upconverter 50.

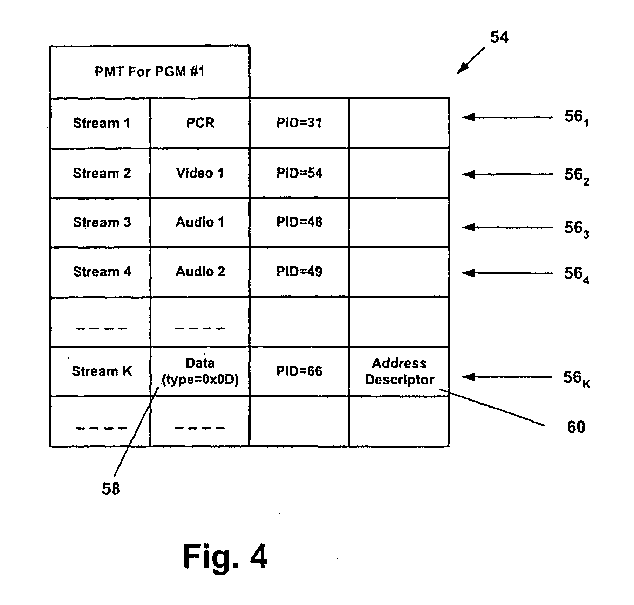

Figure 4 shows a Program Map Table (PMT) 54 in accordance with the present invention. PMT 54, as known to those of ordinary skill in the art, may be transmitted on a program map data stream of an MPEG-2 transport stream.
The optimization that is obtained according to the invention is achieved by combining the appropriate information of both the IP and MPEG protocols in order to facilitate earlier decision making and faster processing in terminal 24. This optimization is accomplished by defining a new data structure, referred to in MPEG nomenclature as a descriptor. It is known to those of ordinary skill in the art that in MPEG-2, the transport multiplex may include several program streams (services) which are indicated in a Program Association Table (PAT). Each program stream (service) may comprise one or more video, audio, and data Packetized Elementary Streams (PES). The elementary streams that make up a program are pointed to by the Program Map Table (PMT). For example, as shown in Figure 4, PMT 54 includes a PCR (i.e., timing) stream 56₁, a first video stream 56₂, a first audio stream 56₃, a second audio stream 56₄, and a data stream 56ₖ. The PMT 54 points to each elementary stream by providing in the table a respective Packet Identification (PID) number where the particular stream in the Transport Stream as a whole may be found. For example, the video stream for program number 1 is indicated in PMT 54 as being carried on PID=54. In addition, each entry in PMT 54 has a corresponding elementary stream-type descriptor, such as type descriptor 58 for data stream entry 56ₖ.

As further illustrated, for an MPEG service (program) that carries IP datagrams within two or more elementary PID streams of stream_type = 0x0D (DSM-CC sections), in accordance with the invention, each such data stream further includes an address descriptor 60 PMT 54. That is, when a data component (i.e., an elementary stream) associated within a given audiovisual service is comprised of IP datagrams, address descriptor 60 is included that enables terminal 24 to determine when it needs to parse and reconstruct (i.e., reassemble the IP datagrams from the DSM-CC sections, for example) and when it should ignore the incoming data. In particular, address descriptor 60 will be processed by terminal 24 to determine if the component PID stream carries multicast IP data.

In addition, descriptor 60 will carry one or more multicast Media Access Control (MAC) addresses of the DVB-MPE datagram sections that are being carried within a particular component PID stream. Because MPEG messages are limited to 1024 bytes in length, the maximum number of MAC addresses will be limited to approximately 150 entries depending on the number of other descriptors carried in the PMT, as well as the number of component PIDs being identified. In constructed embodiments, a maximum of 150 entries should leave sufficient room to carry the commonly defined PMT descriptors (e.g., language, conditional access, etc.) as well as the mandatory PMT message fields. In an alternative embodiment, if there are more than 150 MAC addresses being carried on a particular PID stream, or if there are many data PID streams that each carry large numbers of different IP datagram streams, then a *range* of MAC addresses can be specified. Descriptor 60 enables terminal 24 to quickly and efficiently identify the data PID streams carrying requested IP data, without having to extract and reassemble DVB-MPE messages in order to filter multicast MAC addresses. An exemplary syntax for descriptor 60 is shown below in Table 2, along with the related definitions.

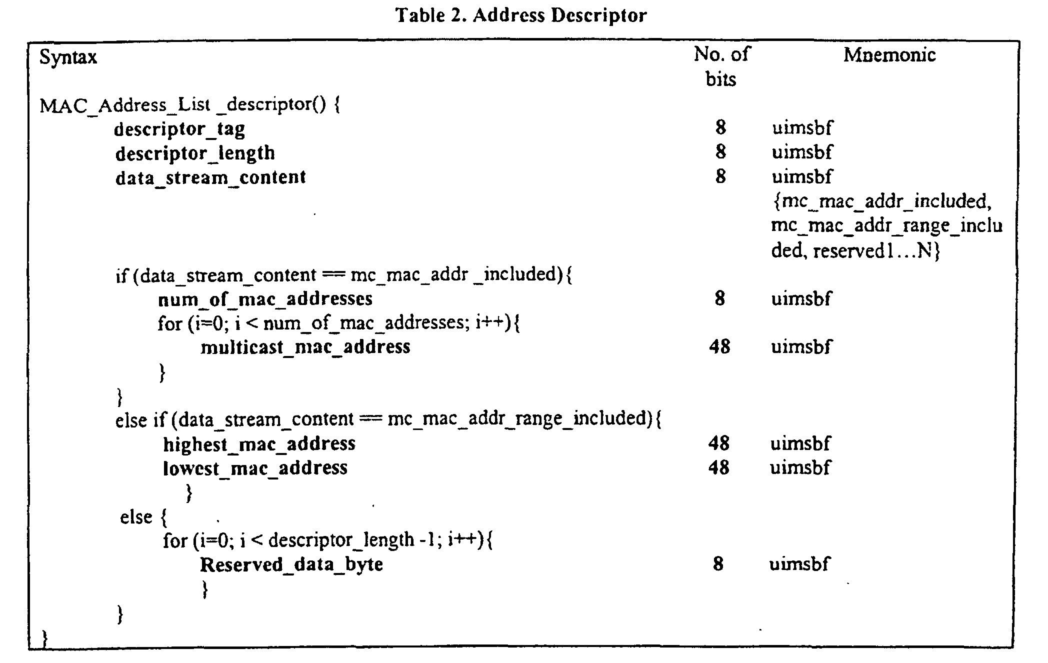

The descriptor_tag parameter is an 8-bit unsigned integer quantity that defines the particular descriptor data structure. The descriptor_length parameter is an 8-bit unsigned integer number that defines the length of the descriptor immediately following the field:
The length parameter includes everything in the descriptor structure except the descriptor_tag parameter and the length byte itself. The data_stream_content parameter is an 8-bit enumerated type field that identifies the contents of the descriptor. The multicast_mac_addr_included descriptor includes a set of destination multicast MAC addresses. The multicast_mac_addr_range_included descriptor includes a range of destination multicast MAC addresses where the range is specified by the highest_mac_address and lowest_mac_address fields. The num_of_mac_addresses is an 8 bit unsigned integer that indicates the number of multicast MAC addresses contained within this descriptor. The multicast_mac_address parameter is a 48 bit multicast MAC group address. The highest_mac_address is a 48 bit multicast group MAC address that is the largest carried by descriptor. The lowest_mac_address is a 48 bit multicast group MAC address that is the smallest carried by descriptor. Other variations are possible, depending on the particulars of any cable and/or satellite television system.

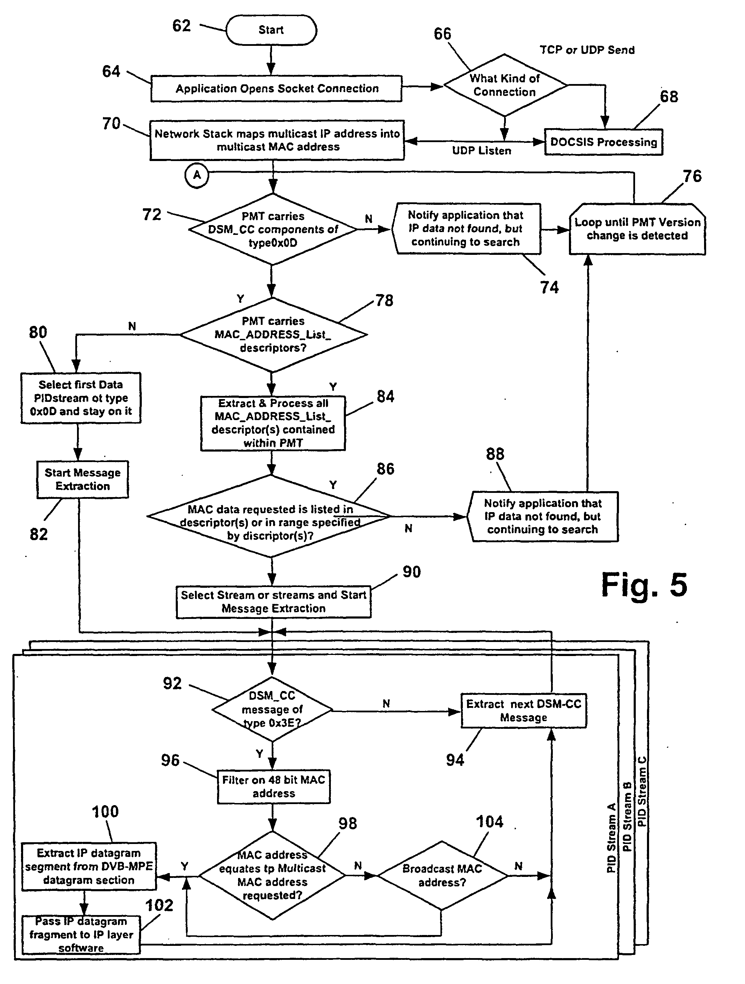

Figure 5 shows a flowchart illustrating how an application executing on terminal 24 can establish a connection to receive IP data. Figure 5 further shows how terminal 24, particularly a decoder portion thereof, will locate and extract multicast IP datagrams that have been requested by an application by specifying the associated multicast MAC address The application connection process begins in step 62.

In step 64, applications executing on terminal 24 open "socket" connections to obtain IP data, typically from an in-band IP data source. However, in an alternate embodiment, terminal 24 includes a cable-modem tuner and associated circuitry and software, allowing the applications executing on terminal 24 to obtain IP data from a DOCSIS-compliant IP data source. For example, commercially available terminals, such as model DCT 5000, available from General Instrument Corporation, Horsham, Pennsylvania, USA, includes such a cable-modem capability. The sockets network interface will provide a *recvfrom* datagram service for connections to both in-band IP data and DOCSIS data sources. In addition, this interface will support a *sendto* datagram service and two-way socket stream data service for connections via the DOCSIS channel only. The method proceeds to step 66.

In step 66, the processing logic determines what kind or type or connection is being requested by the application. When the application opens a socket stream connection (*i.e*., TCP connection) or wants to send UDP datagrams upstream, then terminal 24 will use means for upstream transmission, for example, a DOCSIS port, as shown in step 68. When an application opens a socket connection and wants to "listen-only" for a particular destination IP address and UDP port, terminal 24 will listen on the currently tuned in-band service, and optionally, the DOCSIS port (if terminal 24 is so equipped) for the data. It bears emphasizing that the multicast IP address and UDP port may be "Well Known" to the application (*i.e*., published or otherwise available from the assigned number authority) or may be delivered to the application running on the terminal 24 through other mechanisms (*e.g*., an ATVEF Announcement).

In step 70, the multicast IP address is mapped into a multicast MAC address. This mapping may be accomplished by mapping the lower 23 bits of the multicast IP address into the lower 23 bits of the multicast MAC address 01.00.5E.00.00.00. This mapping approach is set forth in RFC 1112 hereby incorporated by reference in its entirety. The process then proceeds to decision step 72. The processing that begins at this point, designated "A" (i.e., immediately before decision step 72), is the begin processing point for terminal 24 whenever a "new" Program Map Table (PMT) is received.

In step 72, terminal 24 determines whether the received PMT contains a PID data stream of stream-type 0x0D. For example, as shown in Figure 4, the packetized elementary stream identified as 56ₖ has a stream _type of 0x0D, which indicates that the data contained in that data stream is IP data. If the answer is "NO", then the method branches to step 74, wherein the decoder portion of terminal 24 notifies the application running on terminal 24 that the requested IP data could not be found. The method proceeds to step 76, wherein the decoder portion waits (e.g., loops) until a new PMT is received. At such time as a new PMT is received by terminal 24, the control is transferred to point "A".

However, if the answer to decision step 72 is "YES", then the method proceeds to step 78.

In step 78, the decoder portion determines whether the PMT received by terminal 24 (e.g., PMT 54 shown in Figure 4) contains address descriptor 60 in accordance with the present invention. If the answer is "NO", then the method proceeds to steps 80 and 82, wherein the conventional approach for processing received data is followed. That is, the DVB-MPE datagram sections are extracted, IP datagram fragments are examined. In particular, the decoder will examine the table_id field of messages being carried within the first data PID component of stream_type 0x0D. If the table_id is not equal to 0x3E (DVB-MPE datagram section), the decoder portion will ignore the message and will look at the next message in the PID stream. As described in the Background, this approach is not optimal, and may impose unnecessary resource burdens (e.g., processing and memory requirements) on terminal 24.

If the answer to step 78 is "YES", however, the method proceeds to step 84. In step 84, the decoder portion of terminal 24 extracts and processes all the MAC addresses listed in the descriptor 60 contained in PMT 54. As shown in Table 2, descriptor 60 may particularly identify the multicast MAC addresses, or may indicate a range of multicast MAC addresses. The method then proceeds to step 86.

In step 86, the decoder portion of terminal 24 determines whether the requested IP data, as indicated by the mapped multicast MAC address (from step 70) is listed in descriptor 60, or in the range specified in descriptor 60. If the answer is "NO", then the method proceeds to step 88 wherein the application running on terminal 24 is notified that the IP data cannot presently be found, but that a search will continue. The decoder portion of terminal 24 will also process all other address descriptors associated with other data PID streams of stream_type 0x0D even if the requested multicast MAC address has been found. This is because there may be identical multicast MAC addresses carried on other stream components. This scenario results because of the mapping approach used for mapping multicast IP addresses to multicast MAC addresses, which is not guaranteed to produce unique multicast MAC addresses. Multicast IP addresses have 28 significant bits (the first four are fixed identifying a Class D address). As described above, only the lower 23 bits are mapped into the lower 23 bit positions of the multicast MAC address 01.00.5E.00.00.00. Thus, it is possible for different multicast IP addresses to map into the same multicast MAC address, at least under the approach set forth in RFC 1112 used in a constructed embodiment. Preferably, IP data sources (for example, as shown in Figure 2) take this detail into account in selecting a multicast address or range of addresses so as to maintain a unique multicast MAC address on any particular network.

The method proceeds to step 90.

In step 90, the decoder of terminal 24 selects a stream or multiple streams and starts message extraction. Once the decoder has begun extracting the DVB-MPE datagram sections being carried within one or more data PID streams, it will insure that the table_id field of the messages is "0x3E", which indicates that the message is a DVB-MPE datagram section. This step is shown as decision step 92 in Figure 5. If the answer is ''NO'', then the method branches to step 94, wherein the next DSM-CC message is extracted for processing. If , however, the answer to step 92 is "YES", then the method branches to step 96.

In step 96, (e.g., the table_id = "0x3E"), the decoder of terminal 24 compares the 48 bit multicast MAC address, as carried within the datagram section (see Figure 1), with the requested multicast MAC address (formed in step 70). The filtering and comparison steps as shown as steps 96, 98 in Figure 5. If the answer is "YES", then the DVB-MPE datagram section is confirmed as carrying a segment of the IP datagram requested by the application. Control passes to step 100, wherein the decoder of terminal 24 will extract the IP datagram segments from the DVB-MPE datagram sections. The decoder of terminal 24 will thereafter pass the extracted IP datagram fragment to an IP layer software portion, also running on terminal 24, as shown in step 102. The method then proceeds to step 94, wherein the next message is extracted for further processing.

If, however, the answer to step 98 is "NO", then, one further check must still be made. The data link layer of processing of terminal 24 preferably behaves in a manner similar to a standard network interface. Therefore, the decoder of terminal 24 must check to determine whether the MAC address is a so-called broadcast MAC address (i.e., all ones). If the decoder of terminal 24 determines that a MAC broadcast address has been received, as shown in step 104, then it will extract the IP datagram fragment from the DVB-MPE datagram section, and pass it to the IP layer for further processing, as described above in steps 100, 102.

### EXAMPLE

The present invention is adapted for facilitating the delivery of content in a content data stream (e.g., IP datagrams) to a terminal. In a particular example, the content complies with an Advanced Television Enhancement Forum (ATVEF) specification for advanced television programming. The ATVEF standard enables the association of HTML pages with an audiovisual service, which are adapted for broadcast and reception by a compliant receiver, such as terminal 24. The content is delivered via IP protocol. The ATVEF specification, referred to in the Background, does not specify the delivery or the binding mechanism under the IP layer, although, as also discussed in the Background, certain standards have been proposed that provide the mapping (adaptation) of the IP protocol onto an MPEG transport layer (shown in Figure 1). For example, the ATVEF Transport Type B Broadcast data is delivered to an application (executing on terminal 24), as three different components: Announcements, Triggers, and Resources. Announcements may be delivered to an application on a "Well Known" Multicast IP address and UDP port. Each Announcement points to a Trigger and Resource that are available to the application on the specified Multicast IP addresses and UDP ports. In a common arrangement, the Announcements, Triggers, and Resources are included as part of the same data stream component. This data stream component will be associated with a particular MPEG program by identifying that component within the PMT. Data stream components of stream_type = "0x0D" (i.e., DSM_CC_section), for example, may contain this ATVEF IP data. In accordance with the present invention, the PMT is configured to carry an address descriptor 60, which will be used by terminal 24 in determining whether the data stream component carries IP data. Descriptor 60 includes the destination multicast address of the IP data within the stream. The decoder portion of terminal 24 can then use this information to quickly determine if the data stream carries IP data destined for the currently tuned MPEG program, without having to continuously extract the IP data and pass it to the higher layers for filtering.

The basic application of the present invention for enabling enhanced audiovisual services via ATVEF is as follows. First, the terminal 24 is tuned to an MPEG service containing IP data corresponding to at ATVEF content. An application running on terminal 24 then requests a connection to a Well Known multicast IP address and UDP port carrying ATVEF Announcements. The terminal 24, according to the MPEG-2 standard, locates and extracts a Program Association Table (PAT) in order to find the PMT associated with the audiovisual service. The terminal 24 then extracts the PMT in order to identify the various service components (audio, video, data) associated with the tuned service. When terminal 24 observes data component PID streams of stream_type 0x0D (DSM- CC sections), then it, according to the invention, examines the inventive address descriptors (e.g., address descriptor 60) associated with such content data stream. From descriptor 60, the terminal 24 determines that the PID stream carries IP data, and further the multicast MAC addresses associated with such content data stream.

The decoder of terminal 24 then parses through the list of MAC addresses in descriptor 60 (or multiple descriptors 60 if multiple component data streams of type 0x0D are present), looking for the multicast MAC address requested by the application. The list of multicast, destination MAC addresses may be cached, locally, for later use.

If the requested multicast MAC address (e.g., as mapped in step 70, Figure 5) is contained in the list of multicast MAC addresses in descriptor 60, then terminal 24 assigns a PID filter to extract DVB-MPE datagram sections from the respective data PID stream(s). Otherwise, terminal 24 loops, waiting for a new PMT version.

Terminal 24 then begins extracting DVB-MPE datagram sections. Terminal 24 compares the MAC address fields in the DVB-MPE datagram section (i.e., the device_Id parameters Table 1) to the requested multicast MAC address. If there is a match, the terminal 24 extracts one or more IP datagram fragments from the corresponding DVB-MPE datagram sections payload.

Terminal 24 then passes the IP datagram fragment, carrying a portion of the ATVEF Announcement message, to IP layer software for reassembly into a complete IP datagram and further IP layer processing.

If enabled by subscriber 22, the application may thereafter request a connection to a Trigger and Resource IP address(es) and UDP ports, as provided for in the captured Announcement.

In one embodiment, the application determines what ATVEF Trigger and Resources to request based on, for example only, a language preference. The application further requests (internal to the operating system of terminal 24) sufficient memory/bandwidth to accept the largest resource/fastest download. According to the ATVEF standard (see the Background), there are provisions for different levels of resources which use varying levels of memory and/or require greater bandwidth.

Terminal 24 then examines cached multicast MAC addresses from previously examined PMT descriptors 60 associated with data PID streams. The terminal 24 determines which stream carries the requested IP data and extracts IP data fragments from DVB-MPE datagrams sections. The terminal 24 then passes the captured IP datagram fragments to the IP layer software for re-assembly into a complete IP datagram and for further IP processing. The application caches the captured Resource data and processes a Trigger in a like manner when it arrives at terminal 24. Through the foregoing, a subscriber efficiently gains access to an audiovisual service, enhanced by ATVEF data.

According to the invention, a Program Map Table (PMT) used in a MPEG digital network is configured to carry a new message--an address descriptor. The address descriptor facilitates the delivery of IP data to a subscriber's terminal by providing information (i.e., a multicast MAC address) useful to the terminal in efficiently locating the component PID data stream the carries the content (IP data).

The foregoing is exemplary and not limiting in nature, modifications and variations are possible without departing from the scope of the invention, which are limited only by the appended claims. It should be understood that variations are possible. For example, although the above describes a scenario where the in-band IP data is directly associated with a particular MPEG program (i.e., audiovisual service), it should be understood that alternate embodiments provide a system where an application on terminal 24 is able to locate services carrying IP data either within the currently tuned MPEG transport stream (as described above) or an entirely different MPEG transport stream or streams. The present invention, in addition, is generally applicable to facilitating delivery of IP data, one example of which is the carriage of ATVEF IP data. However, other uses include, but are not limited to, facilitating delivery of IP data from an Internet website, or, as another example, the delivery of code objects to terminal 24 (e.g., operating systems, applications, etc.).

## Claims

1. A method for facilitating delivery of content in a content data stream to a terminal (24), said method comprising the steps of:
generating a descriptor (60) for the content data stream, said descriptor (60) including at least one destination address, said at least one destination address comprising at least one multicast Media Access Control address; and
transmitting the descriptor to the terminal (24) in a Program Map Table (54);
locating the content data stream using the destination address in the descriptor (60) at said terminal (24).

2. The method of claim 1 further including the step of:
extracting a message corresponding to the identified content from the content data stream.

3. The method of claim 1 wherein the data service is transmitted to the terminal in a Moving Pictures Expert Group-2 (MPEG-2) transport stream.

4. The method of claim 3 wherein the content complies with an Advanced Television Enhancement Forum (ATVEF) specification for advanced television programming.

5. The method of claim 4 wherein the ATVEF content is carried using the User Datagram Protocol (UDP) and Internet Protocol (IP), said method further comprising the steps of:
encapsulating IP datagrams in a form capable of being carried in an MPEG-2 transport stream; and
transmitting the encapsulated IP datagrams to the terminal (24) in the transport stream.

6. The method of claim 5 wherein the transmitting step comprises the substep of:
multicasting the encapsulated datagrams to plurality of terminals including said terminal (24).

7. The method of claim 5 wherein said form corresponds to a Digital Video Broadcasting/Multi-Protocol Encapsulation (DVB-MPE) specification for datagram sections.

8. The method of claim 5 wherein said form corresponds to an Advanced Television Systems Committee (ATSC) specification for addressable concerns.

9. The method of claim 6 further including the steps of:
executing an application on the terminal (24) configured to use the content;
requesting a connection to a multicast IP address where the content may be located; and
mapping the multicast IP address to a corresponding multicast Media Access Control address.

10. The method of claim 9 wherein said step of locating the content data stream includes the substeps of:
extracting said at least one multicast Media Access Control address included in the descriptor from the Program Map Table (54); and
determining whether the mapped multicast Media Access Control address is included in the extracted at least one multicast Media Access Control address.

11. The method of claim 10 further including the step of:
extracting a message corresponding to the ATVEF content when the mapped multicast Media Access Control address is included in the extracted at least one multicast Media Access Control address.

12. The method of claim 11 further including the step of:
providing, via the application, enhanced audiovisual service in accordance with the extracted message.

13. The method of claim 1, wherein the data service is an audiovisual service, and wherein the content data stream and Program Map Table (54) is associated with the audiovisual service.

14. The method of any preceding claim wherein said method facilitates delivery of said content data stream to said terminal (24) through a Moving Pictures Expert Group (MPEG) transport stream for enhancing a data service carried by said MPEG transport stream, said method including the step of:
recovering a message from the content data stream that corresponds to the content using the destination address included in the descriptor (60).

15. The method of claim 14 wherein the message is carried in the same service stream of said MPEG transport stream as the data service

16. The method of claim 15 wherein the content comprises Advanced Television Enhancement Forum (ATVEF) compliant content.

17. An apparatus for facilitating delivery of a content data stream including content through a Motion Pictures Expert Group (MPEG) transport stream to a terminal (24) for enhancing an audiovisual service, said apparatus comprising:
a memory configured to store a multicast IP address associated with said content data stream; and
a processor configured to generate an address descriptor (60) destined for inclusion in a Program Map Table (54), said descriptor (60) including at least one destination address generated in accordance with said multicast IP address; wherein
said at least one destination address comprises at least one multicast Media Access Control destination address.

18. A terminal comprising:
an application configured to request a connection to a multicast IP address for receiving content configured to enhance a data service;
means for examining a Program Map Table (54) associated with said audiovisual service for the presence of an address descriptor (60), said address descriptor (60) including a multicast Media Access Control address; and
means for recovering a message corresponding to said content when using said multicast Media Access Control address and providing said message to said application.

## Patentansprüche

1. Ein Verfahren zum Erleichtern der Lieferung von Inhalt in einem Inhaltsdatenstrom an ein Terminal (24), wobei das Verfahren folgende Schritte beinhaltet:
Erzeugen eines Deskriptors (60) für den Inhaltsdatenstrom, wobei der Deskriptor (60) mindestens eine Zieladresse umfasst, wobei die mindestens eine Zieladresse mindestens eine Multicast-Medienzugriffssteuerungsadresse beinhaltet; und
Übertragen des Deskriptors auf das Terminal (24) in einer PMT (54) (Program Map Table);
Lokalisieren des Inhaltsdatenstroms unter Verwendung der Zieladresse in dem Deskriptor (60) an dem Terminal (24).

2. Verfahren gemäß Anspruch 1, das ferner folgenden Schritt umfasst:
Extrahieren einer Meldung, die dem identifizierten Inhalt aus dem Inhaltsdatenstrom entspricht.

3. Verfahren gemäß Anspruch 1, wobei der Datendienst in einem MPEG-2 Transportstrom (Moving Pictures Expert Group-2 Transportstrom) auf das Terminal übertragen wird.

4. Verfahren gemäß Anspruch 3, wobei der Inhalt mit der ATVEF-Spezifikation (Advanced Television Enhancement Forum) zur verbesserten Fernseh-Programmgestaltung konform ist.

5. Verfahren gemäß Anspruch 4, wobei der ATVEF-Inhalt unter Verwendung des UDP-Protokolls (User Datagram Protocol) und des IP-Protokolls (Internet Protocol) getragen wird, wobei das Verfahren ferner folgende Schritte beinhaltet:
Verkapseln von IP-Datagrammen in eine Form, die in einem MPEG-2-Transportstrom getragen werden kann; und
Übertragen der verkapselten IP-Datagramme auf das Terminal (24) im Transportstrom.

6. Verfahren gemäß Anspruch 5, wobei der Übertragungsschritt folgenden Unterschritt beinhaltet:
Sammelsenden der verkapselten Datagramme an eine Vielzahl von Terminals, einschließlich des Terminals (24).

7. Verfahren gemäß Anspruch 5, wobei die Form einer DVB-MPE-Spezifikation (Digital Video Broadcasting/Multi-Protocol Encapsulation) für Datagrammabschnitte entspricht.

8. Verfahren gemäß Anspruch 5, wobei die Form einer ATSC-Spezifikation (Advanced Television Systems Committee) für adressierbare Angelegenheiten entspricht.

9. Verfahren gemäß Anspruch 6, das ferner folgende Schritte umfasst:
Ausführen einer Anwendung auf dem Terminal (24), das zur Verwendung des Inhalts konfiguriert ist;
Anfordern einer Verbindung zu einer Multicast-IP-Adresse, an der sich der Inhalt befinden kann; und
Abbilden der Multicast-IP-Adresse auf einer entsprechenden Multicast-Medienzugriffssteuerungsadresse.

10. Verfahren gemäß Anspruch 9, wobei der Schritt des Lokalisierens des Inhaltsdatenstroms folgende Unterschritte umfasst:
Extrahieren der mindestens einen Multicast-Medienzugriffssteuerungsadresse, die in dem Deskriptor aus der PMT (54) (Program Map Table) eingeschlossen ist; und
Bestimmen, ob die abgebildete Multicast-Medienzugriffssteuerungsadresse in der mindestens einen extrahierten Multicast-Medienzugriffssteuerungsadresse eingeschlossen ist.

11. Verfahren gemäß Anspruch 10, das ferner folgenden Schritt umfasst:
Extrahieren einer Meldung, die dem ATVEF-Inhalt entspricht, wenn die abgebildete Multicast-Medienzugriffssteuerungsadresse in der mindestens einen extrahierten Multicast-Medienzugriffssteuerungsadresse eingeschlossen ist.

12. Verfahren gemäß Anspruch 11, das ferner folgenden Schritt umfasst:
Bereitstellen eines verbesserten audiovisuellen Dienstes in Übereinstimmung mit der extrahierten Meldung über die Anwendung.

13. Verfahren gemäß Anspruch 1, wobei der Datendienst ein audiovisueller Dienst ist und wobei der Inhaltsdatenstrom und die PMT (54) (Program Map Table) mit dem audiovisuellen Dienst verbunden sind.

14. Verfahren gemäß einem der vorhergehenden Ansprüche, wobei das Verfahren die Lieferung des Inhaltsdatenstroms an das Terminal (24) durch einen MPEG-Transportstrom (Moving Pictures Expert Group-Transportstrom) zum Verbessern eines Datendienstes, der durch diesen MPEG-Transportstrom getragen wird, erleichtert, wobei das Verfahren folgenden Schritt umfasst:
Wiedergewinnen einer Meldung aus dem Inhaltsdatenstrom, der dem Inhalt, der die in dem Deskriptor (60) eingeschlossene Zieladresse verwendet, entspricht.

15. Verfahren gemäß Anspruch 14, wobei die Meldung in demselben Dienststrom des MPEG-Transportstroms wie der Datendienst getragen wird.

16. Verfahren gemäß Anspruch 15, wobei der Inhalt ATVEF (Advanced Television Enhancement Forum) konformen Inhalt beinhaltet.

17. Eine Vorrichtung zum Erleichtern der Lieferung eines Inhaltsdatenstroms, einschließlich Inhalts, durch einen MPEG-Transportstrom (Motion Pictures Expert Group Transportstrom) an ein-Terminal (24) zum Verbessern eines audiovisuellen Dienstes, wobei die Vorrichtung Folgendes beinhaltet:
einen Speicher, der konfiguriert ist, um eine mit dem Inhaltsdatenstrom verbundene Multicast-IP-Adresse abzuspeichern; und
einen Prozessor, der konfiguriert ist, um einen Adressdeskriptor (60) zu erzeugen, welcher zum Einschluss in einer PMT (54) (Program Map Table) vorgesehen ist, wobei der Deskriptor (60) mindestens eine in Übereinstimmung mit der Multicast-IP-Adresse erzeugte Zieladresse umfasst; wobei
die mindestens eine Zieladresse mindestens eine Multicast-Medienzugriffssteuerungs-Zieladresse beinhaltet.

18. Ein Terminal, das Folgendes beinhaltet:
eine Anwendung, die konfiguriert ist, um eine Verbindung mit einer Multicast-IP-Adresse zum Empfang von Inhalt, der konfiguriert ist, um einen Datendienst zu verbessern, anzufordern;
ein Mittel zur Überprüfung einer PMT (54) (Program Map Table), die mit dem audiovisuellen Dienst für die Bestimmung der Anwesenheit eines Adressdeskriptors (60) verbunden ist, wobei der Adressdeskriptor (60) eine Multicast-Medienzugriffssteuerungsadresse umfasst; und
ein Mittel zur Wiedergewinnung einer Meldung, die dem Inhalt entspricht, wenn diese Multicast-Medienzugriffssteuerungadresse verwendet wird und Bereitstellen der Meldung an die Anwendung.

## Revendications

1. Un procédé pour faciliter la remise de contenu dans un flot de données de contenu à un terminal (24), ledit procédé comportant les étapes de :
générer un descripteur (60) pour le flot de données de contenu, ledit descripteur (60) comprenant au moins une adresse destination, cette dite adresse destination au moins comportant une adresse de contrôle d'accès aux supports multidiffusion au moins ; et
transmettre le descripteur au terminal (24) dans une PMT (Program Map Table) (54) ;
situer le flot de données de contenu en utilisant l'adresse destination dans le descripteur (60) au niveau dudit terminal (24).

2. Le procédé de la revendication 1 comprenant de plus l'étape de :
extraire un message correspondant au contenu identifié provenant du flot de données de contenu.

3. Le procédé de la revendication 1 dans lequel le service de données est transmis au terminal dans un flot de transport MPEG-2 (Moving Pictures Expert Group-2).

4. Le procédé de la revendication 3 dans lequel le contenu est compatible avec une spécification ATVEF (Advanced Television Enhancement Forum) pour une programmation télévision avancée.

5. Le procédé de la revendication 4 dans lequel le contenu ATVEF est véhiculé en utilisant le protocole UDP (User Datagram Protocol) et le protocole IP (Internet Protocol) ledit procédé comportant de plus les étapes de :
encapsuler des datagrammes IP dans une forme capable d'être véhiculée dans un flot de transport MPEG-2 ; et
transmettre les datagrammes IP encapsulés au terminal (24) dans le flot de transport.

6. Le procédé de la revendication 5 dans lequel l'étape de transmission comporte la sous-étape de :
multidiffuser les datagrammes encapsulés à une pluralité de terminaux comprenant ledit terminal (24).

7. Le procédé de la revendication 5 dans lequel ladite forme correspond à une spécification DVB-MPE (Digital Video Broadcasting/Multi-Protocol Encapsulation) pour des sections de datagramme.

8. Le procédé de la revendication 5 dans lequel ladite forme correspond à une spécification ATSC (Advanced Television Systems Committee) pour des préoccupations adressables.

9. Le procédé de la revendication 6 comprenant de plus les étapes de :
exécuter une application sur le terminal (24) configuré pour utiliser le contenu ;
demander une connexion à une adresse IP multidiffusion où le contenu peut être situé ; et
mapper l'adresse IP multidiffusion à une adresse de contrôle d'accès aux supports multidiffusion correspondante.

10. Le procédé de la revendication 9 dans lequel ladite étape de situer le flot de données de contenu comprend les sous-étapes de :
extraire cette dite adresse de contrôle d'accès aux supports multidiffusion au moins comprise dans le descripteur provenant de la PMT (Program Map Table) (54) ; et
déterminer si l'adresse de contrôle d'accès aux supports multidiffusion mappée est comprise dans cette adresse de contrôle d'accès aux supports multidiffusion au moins extraite.

11. Le procédé de la revendication 10 comprenant de plus l'étape de :
extraire un message correspondant au contenu ATVEF lorsque l'adresse de contrôle d'accès aux supports multidiffusion mappée est comprise dans cette adresse de contrôle d'accès aux supports multidiffusion au moins extraite.

12. Le procédé de la revendication 11 comprenant de plus l'étape de :
fournir, par le biais de l'application, un service audiovisuel amélioré conformément au message extrait.

13. Le procédé de la revendication 1, dans lequel le service de données est un service audiovisuel, et dans lequel le flot de données de contenu et la PMT (Program Map Table) (54) sont associés au service audiovisuel.

14. Le procédé de n'importe quelle revendication précédente dans lequel ledit procédé facilite la remise dudit flot de données de contenu audit terminal (24) au travers d'un flot de transport MPEG (Moving Pictures Expert Group) pour améliorer un service de données véhiculé par ledit flot de transport MPEG, ledit procédé comprenant l'étape de :
. récupérer un message provenant du flot de données de contenu qui correspond au contenu en utilisant l'adresse destination comprise dans le descripteur (60).

15. Le procédé de la revendication 14 dans lequel le message est véhiculé dans le même flot de service dudit flot de transport MPEG que le service de données.

16. Le procédé de la revendication 15 dans lequel le contenu comporte du contenu compatible ATVEF (Advanced Television Enhancement Forum).

17. Un appareil pour faciliter la remise d'un flot de données de contenu comprenant du contenu au travers d'un flot de transport MPEG (Motion Pictures Expert Group) à un terminal (24) pour améliorer un service audiovisuel, ledit appareil comportant :
une mémoire configurée pour stocker une adresse IP multidiffusion associée audit flot de données de contenu ; et
un processeur configuré pour générer un descripteur d'adresse (60) destiné à être compris dans une PMT (Program Map Table) (54),
ledit descripteur (60) comprenant au moins une adresse destination générée conformément à ladite adresse IP multidiffusion ; dans lequel
cette dite adresse destination au moins comporte au moins une adresse destination de contrôle d'accès aux supports multidiffusion.

18. Un terminal comportant :
une application configurée pour demander une connexion à une adresse IP multidiffusion pour recevoir du contenu configuré pour améliorer un service de données ;
un moyen pour examiner une PMT (Program Map Table) (54) associée audit service audiovisuel pour déterminer la présence d'un descripteur d'adresse (60), ledit descripteur d'adresse (60) comprenant une adresse de contrôle d'accès aux supports multidiffusion ; et
un moyen pour récupérer un message correspondant audit contenu lorsqu'utilisant ladite adresse de contrôle d'accès aux supports multidiffusion et fournir ledit message à ladite application.
